# EUROPEAN PATENT APPLICATION

(11) **EP 4 756 688 A1**
(43) Date of publication of application: **10.06.2026**
(21) Application number: 25219974.0
(22) Date of filing: 02.12.2025
(51) Int. Cl.: G06Q 10/087, G01C 21/20, G06Q 30/0601

(54) **IN-BUILDING WAYFINDING SYSTEM AND METHOD**

(30) Priority: 03.12.2024 US 202418967606
(71) Applicant: T MOBILE INNOVATIONS LLC, Overland Park KS 66251-2100 (US)
(72) Inventor: BERTZ, Lyle T., Lee s Summit, 64086 (US); BUTLER, Robert K., Overland Park, 66210 (US)
(74) Representative: Suddaby, Mark Edward

(57) **Abstract**

A method of assisting to find an item inside a building. The method comprises monitoring a location of each of a plurality of radio frequency identity (RFID) tags by a wayfinding application executing on a computer system, wherein at least one of the RFID tags has a near field communication (NFC) capability; based on detecting that the plurality of RFID tags move in concert with each other, associating the plurality of RFID tags to a cart by the wayfinding application; receiving a request for directions to locate the item inside the building by the wayfinding application; looking up a location inside the building of the item by the wayfinding application; transmitting the directions by the wayfinding application to a user equipment (UE); and presenting on a display of the UE directions for the user to navigate to the location of the item.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Shoppers in a retail store may employ a physical shopping cart to store retail items selected for purchase from display shelves as the shopper navigates through the aisles of the store. Shoppers may sometimes wish to locate an item for purchase whose location within the store they do not know. Sometimes a shopper is able to locate a retail item among other like items - for example a specific condiment may be discovered among other condiments grouped together in one place in the store. But sometimes a shopper is not sure how to categorize a desired item or perhaps the item is not shelved among other similar items for some reason.

### SUMMARY

In an embodiment, a method of assisting a shopper to find an item inside a retail store is disclosed. The method comprises scanning an identity of a radio frequency identity (RFID) tag having near field communication (NFC) capability by an application executing on a user equipment (UE), wherein the RFID tag is affixed to a shopping cart and wherein the UE is associated with a user that is inside the retail store; transmitting the identity of the RFID tag by the application to a wayfinding application executing on a computer system; associating the identity of the RFID tag to the application by the wayfinding application; and monitoring a location of the RFID tag by the wayfinding application. The method further comprises receiving a request for directions to locate the item inside the retail store by the wayfinding application from the application; looking up a location inside the store of the item by the wayfinding application; determining directions for navigating from a current location of the RFID tag to the location of the item by the wayfinding application; transmitting the directions for navigating from the current location of the RFID tag to the location of the item by the wayfinding application to the application; and presenting on a display of the UE by the application directions for the user to navigate to the location of the item.

In another embodiment, a method of assisting a shopper to find an item inside a retail store is disclosed. The method comprises monitoring a location of each of a plurality of radio frequency identity (RFID) tags by a wayfinding application executing on a computer system, wherein at least one of the RFID tags has a near field communication (NFC) capability; based on detecting that the plurality of RFID tags move in concert with each other, associating the plurality of RFID tags to a shopping cart by the wayfinding application; and based on analyzing the locations of each of the plurality of RFID tags as the shopping cart changes location, determining a cart forward-facing orientation pattern of the plurality of RFID tags. The method further comprises receiving a request for directions to locate the item inside the retail store by the wayfinding application from an application executing on a user equipment (UE), wherein the UE is associated with a shopper using the shopping cart; looking up a location inside the store of the item by the wayfinding application; determining directions for navigating from a current location of the plurality RFID tags to the location of the item by the wayfinding application, wherein the directions are determined at least in part on the forward-facing orientation of the plurality of RFID tags and the current location of the plurality of RFID tags; transmitting the directions by the wayfinding application to the application; and presenting on a display of the UE by the application directions for the shopper to navigate to the location of the item.

In yet another embodiment, a system to assist a shopper finding an item inside a retail store. The system comprises a plurality of shopping carts, wherein at least one radio frequency identity (RFID) tag having a near field communication (NFC) capability is affixed to each shopping cart of the plurality of shopping carts; an at least one processor; a non-transitory memory; and a wayfinding application stored in the non-transitory memory. When executed by the at least one processor, the wayfinding application receives a message from a user equipment (UE) associated with a shopper using one of the plurality of shopping cards, wherein the message identifies an RFID tag associated with the one of the plurality of shopping carts being used by the shopper, associates the RFID tag associated with the one of the plurality of shopping carts being used by the shopper to the UE associated with the shopper, and monitors a location of the RFID tag associated with the one of the plurality of shopping carts being used by the shopper. The wayfinding application further receives a request for directions to locate the item inside the retail store from the UE, looks up a location inside the store of the item, determines directions for navigating from a current location of the RFID tags associated with the shopping cart being used by the shopper to the location inside the store of the item, and transmits the directions to the UE.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2A and FIG. 2B are illustrations of RFID tags affixed to shopping carts according to an embodiment of the disclosure.
FIG. 3A and FIG. 3B are block diagrams of two different RFID tags according to an embodiment of the disclosure.
FIG. 4 is a flow chart of a method according to an embodiment of the disclosure.
FIG. 5 is a flow chart of another method according to an embodiment of the disclosure.
FIG. 6 is an illustration of a user equipment according to an embodiment of the disclosure.
FIG. 7 is a block diagram of a hardware architecture of a user equipment according to an embodiment of the disclosure.
FIG. 8A is a block diagram of a software architecture of a user equipment according to an embodiment of the disclosure.
FIG. 8B is a block diagram of another software architecture of a user equipment according to an embodiment of the disclosure.
FIG. 9 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

In some cases, smart shopping carts are used to help customers within a store. For example, smart carts may help customers find items in the store. Often times, smart carts are equipped with additional hardware, such as a tablet screen. However, these tablet screens are expensive and often get damaged with customers using the cart. Also, customers may be unfamiliar with the interfaces on these tablets, which cause customer frustrations. Another option for wayfinding within a store is to use a customer's phone location. However, this may be resource intensive for the customer's phone to continuously determine and transmit its location (e.g., this may prematurely discharge the battery of the customer's phone). Further, often times, a store's Wi-Fi network is already constrained, and having customers' devices continuously transmitting locations will exacerbate this. Additionally, use of the customer's phone to determine and share location could cause privacy concerns.

To address the foregoing technical challenges, the pending application is directed to a more efficient smart cart. In particular, one or more NFC tags may be placed on a shopping cart. The customer may tap their device (e.g., his or her smart phone), which comprises an NFC reader, on one of the NFC tags. Based on this tapping, a backend system may then bind the customer's device to the tag and the tag to the customer's shopping session using the particular store's application (e.g., a store's loyalty application) such that the tag's location is used as a proxy for the customer during that particular shopping session. Thus, when a customer is requesting the location of an item in the store, the backend system uses the location of the associated tag as the customer's location to provide a location and/or directions to the customer via the store's application.

The smart cart disclosed herein results in multiple efficiency improvements over prior store wayfinding or smart cart type systems because it offloads the customer's device. In particular, the customer's device is no longer spending its own resources locating itself and the customer's device and the backend system are not having to continuously communicate with updated locations. Further, the smart cart disclosed herein uses the RFID network in the store rather than the store's Wi-Fi network, which keeps most of the Wi-Fi transactions to just updating over the Wi-Fi network on the downlink, thereby increasing available bandwidth. Additionally, the smart cart disclosed herein drives the customer back to their device to use the store's application that they are already familiar with, which is beneficial to the store and increases customer satisfaction.

In an embodiment, one NFC tag may be placed on the shopping cart to create the smart cart. In a different embodiment, multiple NFC tags may be placed on the shopping cart to create the smart cart. The multiple tags may be placed in different locations on the cart, which would improve location accuracy. During the commissioning phase of the tag, the backend system may store the association of the multiple tags with the cart. Alternatively, the system could infer that multiple tags are on the same cart based on location/clustering algorithms that use the locations/data transmitted from the multiple tags to the fixed readers at the store and then to our backend system. The system could infer the front and back of the cart with the use of multiple tags, which enables the correct orientation of the customer, thereby resulting in more accurate directions given to the customer.

In an embodiment, the disclosure teaches a system and methods for assisting a shopper to find an item inside a retail store. Each of a plurality of shopping carts at the retail store may be configured with one or more radio frequency identity (RFID) tags. At least one of these RFID tags is a type V RFID tag that has near field communication (NFC) capability. A shopper with a shopping assistance client application executing on his or her user equipment (UE) (e.g., smart phone or tablet), can tap their UE on the type V RFID tag, and the UE can send a message containing a unique identifier of the type V RFID tag via a Wi-Fi radio link within the store to a shopping assistance server application. Based on the unique identifier of the type V RFID tag, the shopping assistance server application can associate the UE of the shopper to the shopping cart (the type V RFID tag can stand as a proxy of the shopping cart since it is affixed to the shopping cart) for the duration of a shopping session. A system of RFID readers within the store can locate the shopping cart, based on tracking the one or more RFID tags affixed to the shopping cart; and the shopping cart location information can be sent to the shopping assistance server application. The shopping assistance server application can receive retail item location requests from the shopping assistance client application of the UE, determine a location within the store of the given retail item, determine directions from a current location of the shopping cart to the retail item location, and send the directions to the UE for presentation to the shopper. In this way, a shopper can be assisted in locating retail items he or she desires to purchase.

The system can associate one or more RFID tags to a same shopping cart by detecting that one or more RFID tags change location in concert. The system can then create an association among the RFID tags and a cart identity in a data store. A plurality of RFID tags may be affixed to the same shopping cart to provide redundancy. For example, if a shopping cart has three RFID tags affixed to it, if one of the RFID tags is knocked off the cart by a collision with a shelf or if one of the RFID tags gets damaged and no longer functions because of a collision of the cart with a shelf, the two remaining RFID tags affixed to the cart may support the desired shopping assistance function. If two or more RFID tags are affixed to a same shopping cart, the system may be able to analyze the sequence of changed locations of the RFID tags associated with the same shopping cart to determine an orientation of the RFID tags on the cart, whereby to support analyzing a forwards orientation of the shopping cart. The system disclosed herein provides some features of what might be called a smart shopping cart but without the expense of providing smart electronic devices in the shopping carts. This avoids the trouble of keeping the batteries of smart electronic devices in the shopping carts charged up. Further, by tracking the location of the shopper using RFID tags affixed to shopping carts, the shopper does not need to share the location of his or her UE with the store, thereby maintaining the privacy of the shopper. This system presents a minimum load on a Wi-Fi radio communication network inside the store.

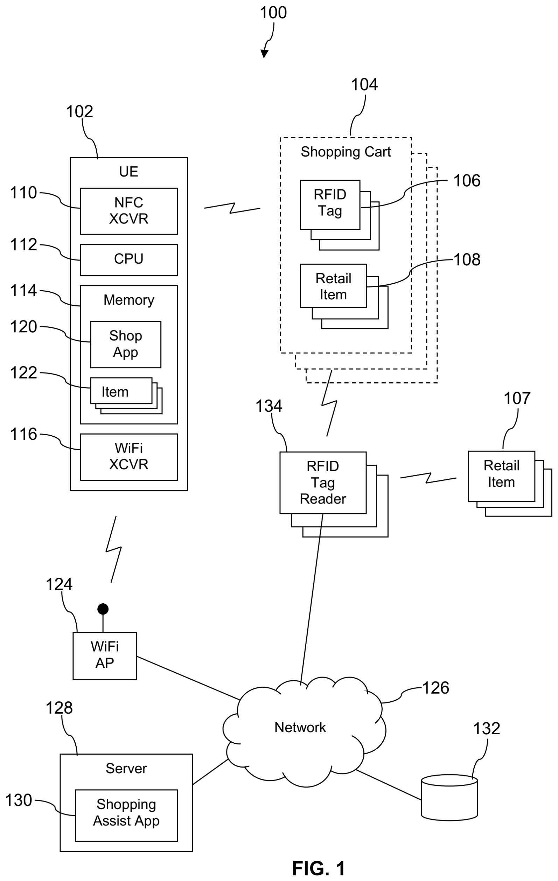

Turning now to FIG. 1, a system 100 is described. In an embodiment, the system 100 comprises a plurality of shopping carts 104 each having one or more radio frequency identity (RFID) tags 106 affixed to the cart. An exemplary shopping cart 104 may have a plurality of retail items 108 stored in them. It is to be noted that the shopping cart 104 discussed herein is a physical shopping cart and not a software or data abstraction of a shopping cart such as may be associated with an electronic on-line shopping web site. A user equipment (UE) 102 associated with a shopper may comprise a near field communication (NFC) radio transceiver 110, a processor 112, a memory 114, and a Wi-Fi radio transceiver 116. The memory 114 may store a shopping assistance client application 120 in a non-transitory portion of the memory 114. In an embodiment, the memory 114 may also store a list of retail items 122 that the shopper has identified for pick-up and purchase. The UE 102 may be a mobile phone, a smart phone, a wearable computer, a headset computer, a laptop computer, a tablet computer, or a notebook computer.

In an embodiment, a single RFID tag 106 may be affixed to the shopping cart 104. In an embodiment, two RFID tags 106 may be affixed to the shopping cart 104. In an embodiment, three RFID tags 106 may be affixed to the shopping cart 104. In an embodiment, four RFID tags 106 may be affixed to the shopping cart 104. In an embodiment, five RFID tags 106 may be affixed to the shopping cart 104. In an embodiment, from six to ten RFID tags 106 may be affixed to the shopping cart 104. In an embodiment, from six to twenty RFID tags 106 may be affixed to the shopping cart 104. The number of RFID tags 106 affixed to different shopping carts 104 at the same store may be different. This may happen because some RFID tags 106 may fall off or be knocked off of some shopping carts 104 and not off of other shopping carts 104. This may happen because the persons affixing RFID tags 106 to the shopping carts 104 may make mistakes in affixing the desired number of RFID tags 106 to the shopping carts 104. A plurality of RFID tags 106 may be affixed to shopping carts 104 to provide redundancy in case of failure of RFID tags 106 and in case of loss of RFID tags 106. RFID tags 106 may fail because of collisions between the shopping cart 104 and other shopping carts or with shelves. RFID tags 106 may fail because of weathering, such as exposure to rain and/or hail and/or ice, as for example when racked in parking lots outside of a store. Conventional RFID tags may cost from 5 cents per tag to 10 cents per tag. Type V RFID tags may be somewhat more expensive than conventional RFID tags but not significantly more expensive.

When a user enters a retail store, he or she may obtain a physical shopping cart and roll the cart inside the store. The user may bring up the shopping assistance client application 120 on the UE 102. The shopping assistance client application 120 may prompt the user to "tap" the UE 102 on an RFID tag 106 of the shopping cart 104, for example a type V RFID tag that comprises an NFC transceiver. During this "tap" activity, the NFC transceiver 110 of the UE 102 communicates with the NFC transceiver in the RFID tag 106 to obtain an identity of the RFID tag 106. The shopping assistance client application 120 sends a message containing the identity of the RFID tag 106 via the Wi-Fi radio transceiver 116 to a Wi-Fi access point 124 in the store. The Wi-Fi access point 124 transmits this message via a network 126 to a shopping assistance server application 130 executing on a computer 128. The shopping assistance server application 130 creates a shopping session data entry or object that associates the UE 102 to the shopping cart 104 associated with the RFID tag 106 whose identity was contained in the message sent to the shopping assistance server application 130 by the shopping assistance client application 120. The shopping assistance server application 130 stores the association of the UE 102 to the shopping cart 104 in a data store 132. The network 126 comprises one or more private networks, one or more public networks, or a combination thereof. In some context, the shopping assistance server application 130 may be referred to as a wayfinding application as it is engaged in helping a shopper navigate through a store to find one or more retail items for purchase, e.g., helps the shopper find his or her way, to wayfind.

The system 100 comprises one or more RFID tag readers 134 disposed within the store. The RFID tag readers 134 are able to read the RFID tags 106 affixed to shopping carts 104 and to determine their locations within the store and/or outside the store. In an embodiment, the RFID tag readers 134 may collaborate to establish the location of RFID tags 106. Alternatively, the RFID tag readers 134 may report their readings of RFID tags 106 back to the shopping assistance server application 130, and the shopping assistance server application 130 may analyze the readings of RFID tags 106 received from the RFID tag readers 134 to establish the location of RFID tags 106. The shopping assistance server application 130 can associate the RFID tags 106 to specific carts. For example, a first, second, and third RFID tag 106 may be associated by the shopping assistance server application 130 to a first shopping cart 104; a fourth and fifth RFID tag 106 may be associated by the shopping assistance server application 130 to a second shopping cart 104; a sixth, seventh, eighth, and ninth RFID tag 106 may be associated by the shopping assistance server application 130 to a third shopping cart 104; and a tenth RFID tag 106 may be associated by the shopping assistance server application 130 to a fourth shopping cart 104. The shopping assistance server application 130 may association RFID tags 106 to different shopping carts 104 by associating those RFID tags 106 that move in concert to a same shopping cart 104.

In an embodiment, the RFID tag readers 134 are able to read RFID tags 106 affixed to retail items 107 disposed on shelves within the store. The RFID tag readers 134 reports information about the RFID tags 106 affixed to retail items 107 to the shopping assistance server application 130, and the shopping assistance server application 130 determines an inventory count and location of retail items 107 within the store and stores this information in the data store 132. Alternatively, in an embodiment, the inventory count and locations of retail items 107 is determined in some other manner (e.g., is submitted via a report of spreadsheet from a store manager workstation or an inventory control software application) and stored in the data store 132.

The shopping assistance client application 120 may send a request to the shopping assistance server application 130 to provide directions to a location of a specific item that the shopper would like to purchase. Alternatively, the shopping assistance client application 120 may send a request to the shopping assistance server application 130 to provide directions to locate each of the items on the list of retail items 122. The shopping assistance server application 130 can determine directions to the item or items based on a current known location of the shopper's shopping cart and based on the known location of the item or items in the store. In the case that the request pertains to a list of retail items 122, the shopping assistance server application 130 may provide directions that comprise a path from the current location of the shopping cart 104, to each of the list of retail items 122 in sequence, and then to the checkout stations. The shopping assistance server application 130 may build these directions so as to generate a shortest navigational path through the store. The shopping assistance server application 130 may build these directions so as to generate a quickest navigational path through the store.

The shopping assistance server application 130 may monitor the location of a plurality of shopping carts 104 moving through the store and provide directions to an item or items to the shopper associated with UE 102 so as to avoid traffic jams in aisles of the store with other shopping carts 104. In an embodiment, the shopping assistance server application 130 may store data of shopping carts 104 moving through the store at different times of day and build up a training data base in the data store 132. The shopping assistance server application 130 may use machine learning (ML) methods to analyze this historical information and generate directions that avoid traffic jams based at least in part on the ML analysis of historical shopping cart 104 movement data in the data store 132.

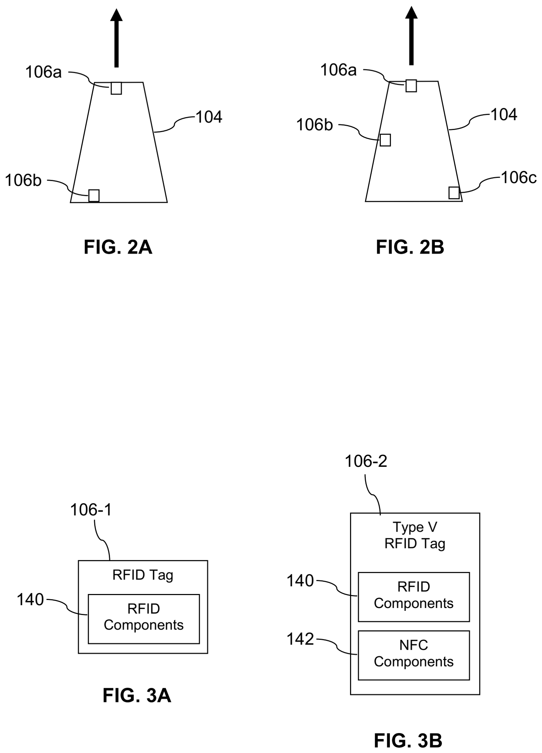

Turning now to FIG. 2A and FIG. 2B, some more details of the shopping cart 104 are described. There may be any number of RFID tags 106 affixed to the shopping cart 104. In FIG. 2A, two RFID tags 106 are illustrated to be affixed to the shopping cart 104 - a first RFID tag 106a and a second RFID tag 106b. In FIG. 2B, three RFID tags 106 are illustrated to be affixed to the shopping cart 104 - the first RFID tag 106a, the second RFID tag 106b, and a third RFID tag 106c. Because the RFID tags 106a and 106b are attached to the same shopping cart 104, these RFID tags 106a, 106b will be observed to change location - to move - in concert with each other. For example, a front of the shopping cart 104 may be oriented as indicated by the arrow in FIG. 2A. Because it can be presumed that most of the time the shopping cart 104 moves in a forward direction, the locations of the RFID tags 106a, 106b over time can be sampled and analyzed to determine the orientation of the RFID tags 106a, 106b relative to the front of the shopping cart 104. This orientation can be stored in the data store 132, for example in an entry or data object associated with the shopping cart 104 that associates the RFID tags 106a, 106b to the shopping cart. Later, this known orientation of the RFID tags 106a, 106b can be used to identity a direction of the shopping cart 104 when it is stationary in the store. This identity of direction may be used, for example, in producing directions for use by a shopper to find a desired retail item, for example, in a command such as "turn right and proceed to aisle 19." In some contexts, this known orientation of the RFID tags 106a, 106b may be referred to as a pattern or orientation pattern of the RFID tags 106a, 106b. While the shopping cart is illustrated in FIG. 2A and in FIG. 2B as being a grocery shopping cart (e.g., a metal tube and wire structure with a trapezoidal open basket and wheels), it will be appreciated that the shopping cart 104 may have other form factors - for example a hand-carried shopping basket, a wheeled hand-drawn trailer, a wheeled hand-pushed platform such as may be found in a lumber yard or hardware store for transporting boards and plywood, or other devices

Turning now to FIG. 3A, a conventional RFID tag 106-1 is described. As illustrated in FIG. 3A, the RFID tag 106-1 comprises RFID components 140. In an embodiment, the RFID components 140 may comprise an integrated circuit for storing and processing information, a radio, and an antenna for communicating signals, etc. For example, the integrated circuit may include memory for storing tag data (e.g., a unique identifier), a modulator for modulating signals, a radio, and circuitry for power management. The RFID tag 106-1 may receive signals from the RFID tag readers 134 to obtain power, obtain power from the received signals, and transmit responses back to the RFID tag readers 134. Generally, RFID tags 106-1 are inexpensive and may cost in the range of from 1 cent per RFID tag to 15 cents per RFID tag.

Turning now to FIG. 3B, a Type V RFID tag 106-2 is described. The Type V RFID tag 106-2 comprises the RFID components 140 associated with the RFID tag 106-1 but further includes near field communication (NFC) components 142. The NFC components 142 may comprise a processor, a memory, a radio, and an antenna. The NFC components 142 may engage with the NFC radio transceiver 110 of the UE 102. For example, the NFC radio transceiver 110 of the UE 102 may radiate a powering radio or electromagnetic field that can be harvested by the NFC components 142 to energize the NFC components 142 and to transmit information from the NFC components 142 to the NFC radio transceiver 110 of the UE 102, for example transmit a unique identity (or a quasi-unique identity) of the NFC components 142 or of the Type V RFID tag 106-2 to the NFC radio transceiver 110 of the UE 102. This operation may be referred to in some contexts as "tapping the UE 102 on the Type V RFID tag 106-2," because this operation involves bringing the UE 102 into close proximity to the Type V RFID tag 106-2 and even touching (though this is not necessary) the type V RFID tag 106-2. In an embodiment, the user of the UE 102 may select or click on a button in an interface displayed on the UE 102 by the shopping assistance client application 120 to "pair the UE to the shopping cart 104." This pairing supports sending a message from the shopping assistance client application 120 to the shopping assistance server application 130 identifying both the UE 102 and the Type V RFID tag 106-2.

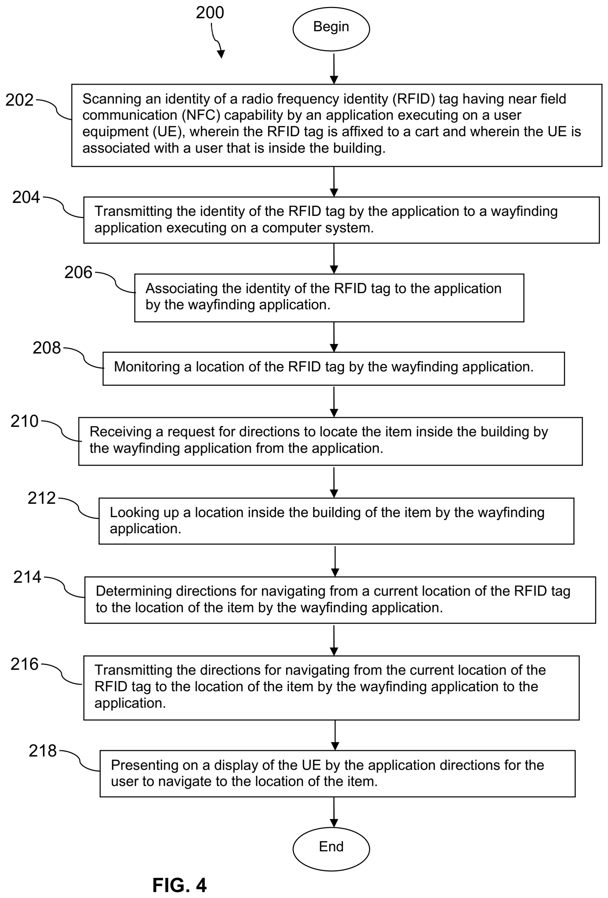

Turning now to FIG. 4, a method 200 is described. In an embodiment, method 200 is a method of assisting to find an item inside a building. In an embodiment, the method assists a shopper to find an item inside a retail store. At block 202, the method 200 comprises scanning an identity of a radio frequency identity (RFID) tag having near field communication (NFC) capability by an application executing on a user equipment (UE) (e.g., the shopping assistance client application 120), wherein the RFID tag is affixed to a cart and wherein the UE is associated with a user that is inside the building. In an embodiment, the cart is a shopping cart or a shopping basket. In an embodiment, the UE is a mobile phone, a smart phone, a wearable computer, a headset computer, a laptop computer, a tablet computer, or a notebook computer. In an embodiment, the building is a retail store such as a grocery store, a department store, a discount store, a pharmacy, a hardware store, or a furniture store. In an embodiment, the RFID tag having NFC capability is a Type V RFID tag. In an embodiment, a plurality of RFID tags are affixed to the cart and some of the RFID tags are Type V RFID tags and some are conventional RFID tags (e.g., conventional in the sense that they are not configured with an NFC capability). In an embodiment, a plurality of RFID tags are affixed to the cart and all of the plurality of RFID tags are Type V RFID tags. In an embodiment, the cart has the form of a hand-carried basket. In an embodiment, the cart has the form of a hand-drawn trailer. In an embodiment, the cart has the form of a hand-pushed platform.

At block 204, the method 200 comprises transmitting the identity of the RFID tag by the application to a wayfinding application executing on a computer system (e.g., the wayfinding application is the shopping assistance server application 130). At block 206, the method 200 comprises associating the identity of the RFID tag to the application by the wayfinding application.

At block 208, the method 200 comprises monitoring a location of the RFID tag by the wayfinding application. At block 210, the method 200 comprises receiving a request for directions to locate the item inside the building by the wayfinding application from the application.

At block 212, the method 200 comprises looking up a location inside the building of the item by the wayfinding application. At block 214, the method 200 comprises determining directions for navigating from a current location of the RFID tag to the location of the item by the wayfinding application.

At block 216, the method 200 comprises transmitting the directions for navigating from the current location of the RFID tag to the location of the item by the wayfinding application to the application. At block 218, the method 200 comprises presenting on a display of the UE by the application directions for the user to navigate to the location of the item.

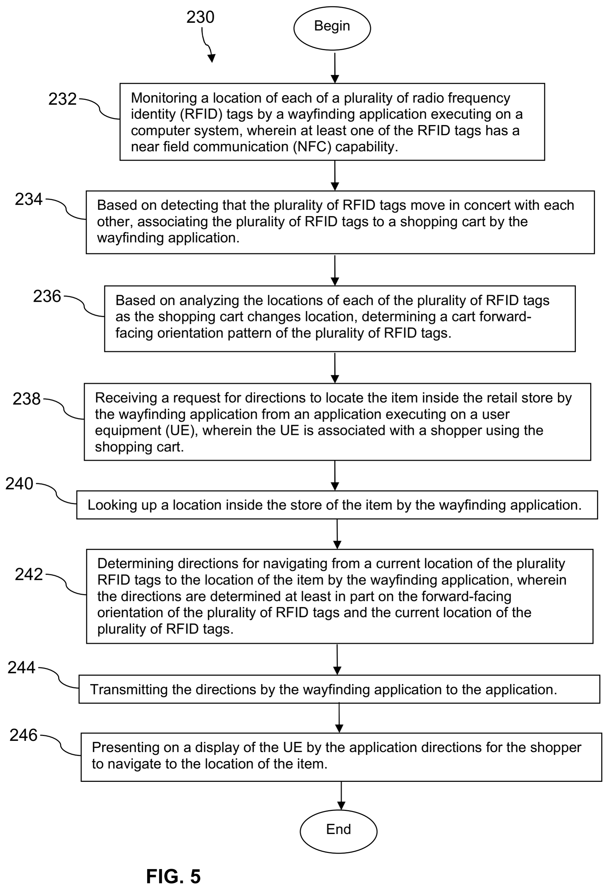

Turning now to FIG. 5, a method 230 is described. In an embodiment, the method 230 is a method of assisting a shopper to find an item inside a retail store. At block 232, the method 230 comprises monitoring a location of each of a plurality of radio frequency identity (RFID) tags by a wayfinding application executing on a computer system (e.g., the wayfinding application is the shopping assistance server application 130), wherein at least one of the RFID tags has a near field communication (NFC) capability. In an embodiment, the at least one RFID tag having NFC capability is a Type V RFID tag. In an embodiment, the method 230 further comprises a plurality of RFID tag readers monitoring the location of each of the plurality of RFID tags and sending the location of each of the plurality of RFID tags to the wayfinding application. In an embodiment, the UE is a mobile phone, a smart phone, a wearable computer, a headset computer, a laptop computer, a tablet computer, or a notebook computer. In an embodiment, each of the plurality of RFID tags comprises in integrated circuit, a radio, and an antenna.

At block 234, the method 230 comprises, based on detecting that the plurality of RFID tags move in concert with each other, associating the plurality of RFID tags to a shopping cart by the wayfinding application. At block 236, the method 230 comprises, based on analyzing the locations of each of the plurality of RFID tags as the shopping cart changes location, determining a cart forward-facing orientation pattern of the plurality of RFID tags.

At block 238, the method 230 comprises receiving a request for directions to locate the item inside the retail store by the wayfinding application from an application executing on a user equipment (UE) (e.g., the shopping assistance client application 120), wherein the UE is associated with a shopper using the shopping cart. At block 240, the method 230 comprises looking up a location inside the store of the item by the wayfinding application.

At block 242, the method 230 comprises determining directions for navigating from a current location of the plurality RFID tags to the location of the item by the wayfinding application, wherein the directions are determined at least in part on the forward-facing orientation of the plurality of RFID tags and the current location of the plurality of RFID tags. In an embodiment, determining directions for navigating is based at least in part on determining a location of other shopping carts by the wayfinding application. For example, the wayfinding application may monitor the location of all the shopping carts moving about the retail store and determine directions for a shopping cart to navigate to a desired item so as to avoid congestion of many shopping carts in a particular aisle of the retail store and instead navigate via a different path so as to avoid the congestion. In an embodiment, the request for directions to locate the item inside the retail store comprises a list of a plurality of items and wherein the directions for navigating from the current location of the plurality of RFID tags to the location of the item by the wayfinding application comprises directions for navigating to each of the plurality of items on the list. In an embodiment, the directions for navigating to each of the plurality of items identifies a shortest path through the store, to all the listed items, to the checkout station. In an embodiment, the directions for navigating to each of the plurality of items identifies a fastest path through the store, to all the listed items, to the checkout station (e.g., the fastest path may be a longer path but may avoid congestion in some aisles and hence may be quicker to traverse and complete one's shopping activity).

At block 244, the method 230 comprises transmitting the directions by the wayfinding application to the application. At block 246, the method 230 comprises presenting on a display of the UE by the application directions for the shopper to navigate to the location of the item.

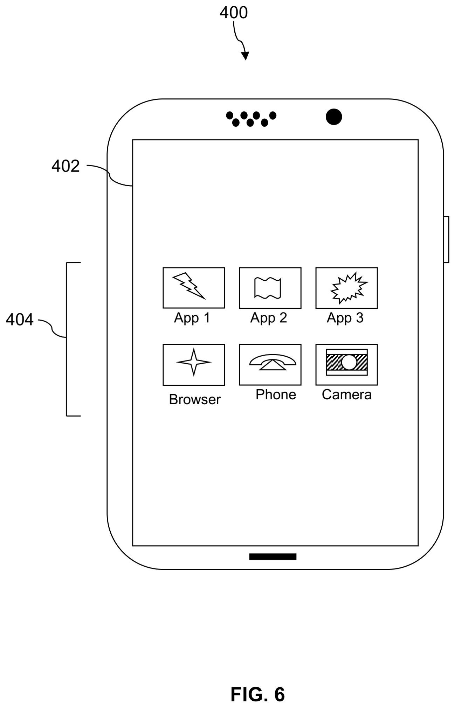

FIG. 6 depicts the user equipment (UE) 400, which is operable for implementing aspects of the present disclosure, but the present disclosure should not be limited to these implementations. Though illustrated as a mobile phone, the UE 400 may take various forms including a wireless handset, a pager, a personal digital assistant (PDA), a gaming device, or a media player. The UE 400 includes a touchscreen display 402 having a touch-sensitive surface for input by a user. A small number of application icons 404 are illustrated within the touch screen display 402. It is understood that in different embodiments, any number of application icons 404 may be presented in the touch screen display 402. In some embodiments of the UE 400, a user may be able to download and install additional applications on the UE 400, and an icon associated with such downloaded and installed applications may be added to the touch screen display 402 or to an alternative screen. The UE 400 may have other components such as electro-mechanical switches, speakers, camera lenses, microphones, input and/or output connectors, and other components as are well known in the art. The UE 400 may present options for the user to select, controls for the user to actuate, and/or cursors or other indicators for the user to direct. The UE 400 may further accept data entry from the user, including numbers to dial or various parameter values for configuring the operation of the handset. The UE 400 may further execute one or more software or firmware applications in response to user commands. These applications may configure the UE 400 to perform various customized functions in response to user interaction. Additionally, the UE 400 may be programmed and/or configured over-the-air, for example from a wireless base station, a wireless access point, or a peer UE 400. The UE 400 may execute a web browser application which enables the touch screen display 402 to show a web page. The web page may be obtained via wireless communications with a base transceiver station, a wireless network access node, a peer UE 400 or any other wireless communication network or system.

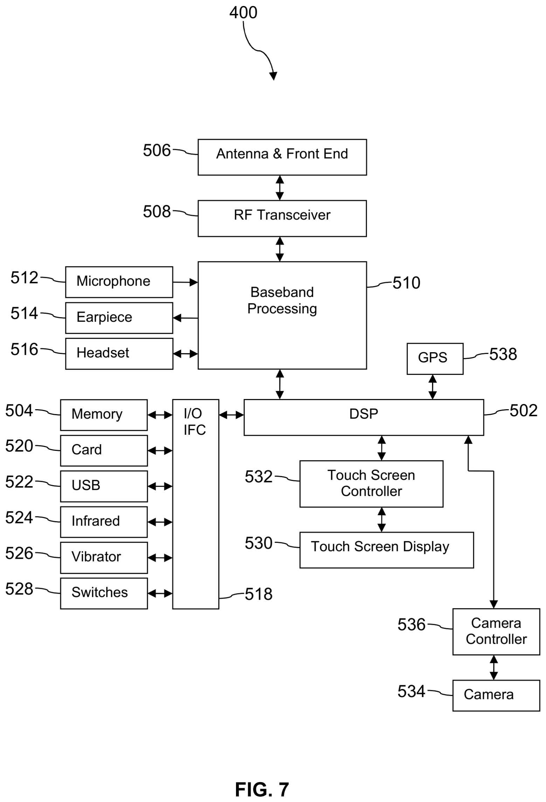

FIG. 7 shows a block diagram of the UE 400. While a variety of known components of handsets are depicted, in an embodiment a subset of the listed components and/or additional components not listed may be included in the UE 400. The UE 400 includes a digital signal processor (DSP) 502 and a memory 504. As shown, the UE 400 may further include one or more antenna and front end unit 506, a one or more radio frequency (RF) transceiver 508, a baseband processing unit 510, a microphone 512, an earpiece speaker 514, a headset port 516, an input/output interface 518, a removable memory card 520, a universal serial bus (USB) port 522, an infrared port 524, a vibrator 526, one or more electro-mechanical switches 528, a touch screen display 530, a touch screen controller 532, a camera 534, a camera controller 536, and a global positioning system (GPS) receiver 538. In an embodiment, the UE 400 may include another kind of display that does not provide a touch sensitive screen. In an embodiment, the UE 400 may include both the touch screen display 530 and additional display component that does not provide a touch sensitive screen. In an embodiment, the DSP 502 may communicate directly with the memory 504 without passing through the input/output interface 518. Additionally, in an embodiment, the UE 400 may comprise other peripheral devices that provide other functionality.

The DSP 502 or some other form of controller or central processing unit operates to control the various components of the UE 400 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB port 522 and the infrared port 524. The USB port 522 may enable the UE 400 to function as a peripheral device to exchange information with a personal computer or other computer system. The infrared port 524 and other optional ports such as a Bluetooth^{®} interface or an IEEE 802.11 compliant wireless interface may enable the UE 400 to communicate wirelessly with other nearby handsets and/or wireless base stations.

In an embodiment, one or more of the radio transceivers is a cellular radio transceiver. A cellular radio transceiver promotes establishing a wireless communication link with a cell site according to one or more of a 5G, a long-term evolution (LTE), a code division multiple access (CDMA), a global system for mobile communications (GSM) wireless communication protocol. In an embodiment, one of the RF transceivers 508 may comprise a near field communication (NFC) transceiver. The NFC transceiver may be used to complete payment transactions with point-of-sale terminals or other communications exchanges. In an embodiment, each of the different RF transceivers 508 may be coupled to its own separate antenna. In an embodiment, the UE 400 may comprise a radio frequency identify (RFID) reader and/or writer device.

The switches 528 may couple to the DSP 502 via the input/output interface 518 to provide one mechanism for the user to provide input to the UE 400. Alternatively, one or more of the switches 528 may be coupled to a motherboard of the UE 400 and/or to components of the UE 400 via a different path (e.g., not via the input/output interface 518), for example coupled to a power control circuit (power button) of the UE 400. The touch screen display 530 is another input mechanism, which further displays text and/or graphics to the user. The touch screen LCD controller 532 couples the DSP 502 to the touch screen display 530. The GPS receiver 538 is coupled to the DSP 502 to decode global positioning system signals, thereby enabling the UE 400 to determine its position.

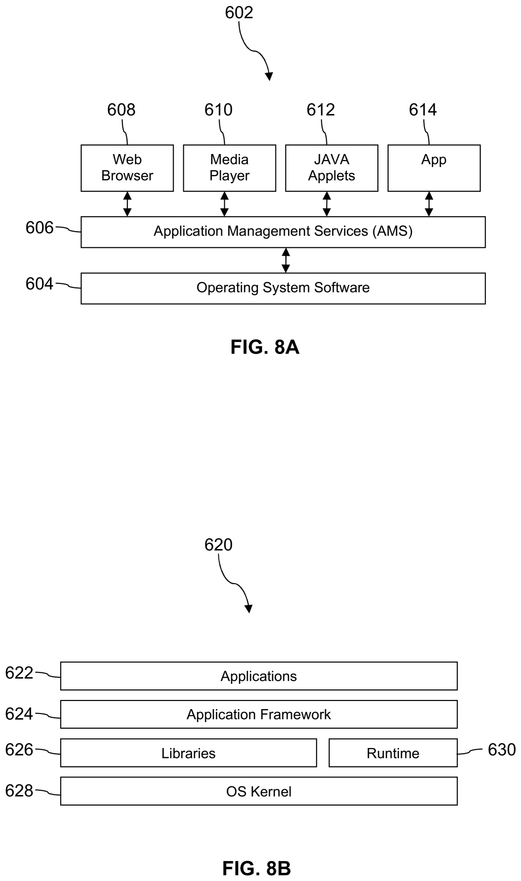

FIG. 8A illustrates a software environment 602 that may be implemented by the DSP 502. The DSP 502 executes operating system software 604 that provides a platform from which the rest of the software operates. The operating system software 604 may provide a variety of drivers for the handset hardware with standardized interfaces that are accessible to application software. The operating system software 604 may be coupled to and interact with application management services (AMS) 606 that transfer control between applications running on the UE 400. Also shown in FIG. 8A are a web browser application 608, a media player application 610, and JAVA applets 612. The web browser application 608 may be executed by the UE 400 to browse content and/or the Internet, for example when the UE 400 is coupled to a network via a wireless link. The web browser application 608 may permit a user to enter information into forms and select links to retrieve and view web pages. The media player application 610 may be executed by the UE 400 to play audio or audiovisual media. The JAVA applets 612 may be executed by the UE 400 to provide a variety of functionality including games, utilities, and other functionality. In an embodiment, an application 614 (e.g., the shopping assistance client application 120 described above with reference to FIG. 1) may execute in the software environment 602, for example on top of the AMS 606 (e.g., using services provided by the AMS 606 and/or the operating system software 604).

FIG. 8B illustrates an alternative software environment 620 that may be implemented by the DSP 502. The DSP 502 executes operating system kernel (OS kernel) 628 and an execution runtime 630. The DSP 502 executes applications 622 that may execute in the execution runtime 630 and may rely upon services provided by the application framework 624. Applications 622 and the application framework 624 may rely upon functionality provided via the libraries 626.

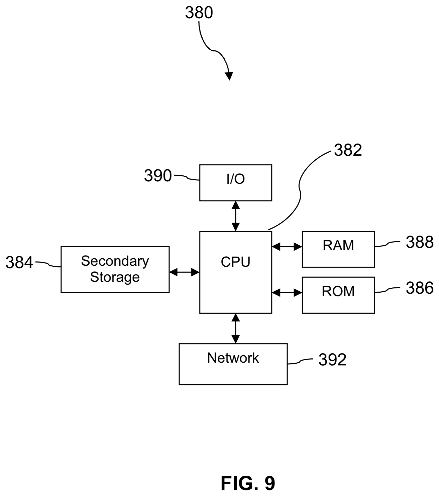

FIG. 9 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), Wi-Fi (IEEE 802.11), Bluetooth, Zigbee, narrowband Internet of things (NB IoT), near field communications (NFC), radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method of assisting to find an item inside a building, comprising:
scanning an identity of a radio frequency identity, RFID, tag having near field communication, NFC, capability by an application executing on a user equipment, UE, wherein the RFID tag is affixed to a cart and wherein the UE is associated with a user that is inside the building;
transmitting the identity of the RFID tag by the application to a wayfinding application executing on a computer system;
associating the identity of the RFID tag to the application by the wayfinding application;
monitoring a location of the RFID tag by the wayfinding application;
receiving a request for directions to locate the item inside the building by the wayfinding application from the application;
looking up a location inside the building of the item by the wayfinding application;
determining directions for navigating from a current location of the RFID tag to the location of the item by the wayfinding application;
transmitting the directions for navigating from the current location of the RFID tag to the location of the item by the wayfinding application to the application; and
presenting on a display of the UE by the application directions for the user to navigate to the location of the item.

2. The method of claim 1, wherein the building is a grocery store, a department store, a discount store, a pharmacy, a hardware store, or a furniture store.

3. The method of claim 1 or 2, wherein the RFID tag having NFC capability is a Type V RFID tag.

4. The method of any preceding claim, wherein the cart has the form of a hand-carried basket, a hand-drawn trailer, or a hand-pushed platform.

5. A method of assisting a shopper to find an item inside a retail store, comprising:
monitoring a location of each of a plurality of radio frequency identity, RFID, tags by a wayfinding application executing on a computer system, wherein at least one of the RFID tags has a near field communication, NFC, capability;
based on detecting that the plurality of RFID tags move in concert with each other, associating the plurality of RFID tags to a shopping cart by the wayfinding application;
based on analyzing the locations of each of the plurality of RFID tags as the shopping cart changes location, determining a cart forward-facing orientation pattern of the plurality of RFID tags;
receiving a request for directions to locate the item inside the retail store by the wayfinding application from an application executing on a user equipment, UE, wherein the UE is associated with a shopper using the shopping cart;
looking up a location inside the store of the item by the wayfinding application;
determining directions for navigating from a current location of the plurality RFID tags to the location of the item by the wayfinding application, wherein the directions are determined at least in part on the forward-facing orientation of the plurality of RFID tags and the current location of the plurality of RFID tags;
transmitting the directions by the wayfinding application to the application; and
presenting on a display of the UE by the application directions for the shopper to navigate to the location of the item.

6. The method of claim 5, wherein the at least one RFID tag having NFC capability is a Type V RFID tag.

7. The method of claim 5 or 6, further comprising a plurality of RFID tag readers monitoring the location of each of the plurality of RFID tags and sending the location of each of the plurality of RFID tags to the wayfinding application.

8. The method of any of claims 5 to 7, wherein each of the plurality of RFID tags comprises in integrated circuit, a radio, and an antenna.

9. The method of any of claims 5 to 8, wherein determining directions for navigating is based at least in part on determining a location of other shopping carts by the wayfinding application.

10. The method of any of claims 5 to 9, wherein the request for directions to locate the item inside the retail store comprises a list of a plurality of items and wherein the directions for navigating from the current location of the plurality of RFID tags to the location of the item by the wayfinding application comprises directions for navigating to each of the plurality of items on the list.

11. A system to assist a shopper finding an item inside a retail store, comprising:
a plurality of shopping carts, wherein at least one radio frequency identity, RFID, tag having a near field communication, NFC, capability is affixed to each shopping cart of the plurality of shopping carts;
an at least one processor;
a non-transitory memory; and
a wayfinding application stored in the non-transitory memory that, when executed by the at least one processor:
receives a message from a user equipment, UE, associated with a shopper using one of the plurality of shopping cards, wherein the message identifies an RFID tag associated with the one of the plurality of shopping carts being used by the shopper,
associates the RFID tag associated with the one of the plurality of shopping carts being used by the shopper to the UE associated with the shopper,
monitors a location of the RFID tag associated with the one of the plurality of shopping carts being used by the shopper,
receives a request for directions to locate the item inside the retail store from the UE,
looks up a location inside the store of the item,
determines directions for navigating from a current location of the RFID tags associated with the shopping cart being used by the shopper to the location inside the store of the item, and
transmits the directions to the UE.

12. The system of claim 11 or the method of any of claims 1 to 10, wherein the UE is a mobile phone, a smart phone, a wearable computer, a headset computer, a laptop computer, a tablet computer, or a notebook computer.

13. The system of claim 11 or 12, wherein the retail store is a grocery store, a department store, a discount store, a pharmacy, a hardware store, or a furniture store.

14. The system of any of claims 11 to 13, wherein the RFID tag identified by the message from the UE is a Type V RFID tag.

15. The system of any of claims 11 to 14, wherein the shopping cart has the form of a hand-carried basket or a wheeled metal tube and wire structure mounted on wheels.
